## Europäisches Patentamt

## European Patent Office

## Office européen des brevets

(19)

(11) Veröffentlichungsnummer: **0 142 762**
**B1**

(12) **EUROPÄISCHE PATENTSCHRIFT**

(45) Veröffentlichungstag der Patentschrift:
**25.01.89**

(21) Anmeldenummer: **84113265.7**

(22) Anmeldetag: **03.11.84**

(51) Int. Cl.⁴: **F 16 L 59/12**

(54) **Zylindrischer Mantel aus Metall.**

(30) Priorität: **19.11.83 DE 3341869**

(43) Veröffentlichungstag der Anmeldung:
**29.05.85 Patentblatt 85/22**

(45) Bekanntmachung des Hinweises auf die Patenterteilung:
**25.01.89 Patentblatt 89/4**

(84) Benannte Vertragsstaaten:
**AT BE CH FR GB IT LI NL SE**

(56) Entgegenhaltungen:
**DD-A-143 066**
**US-A-1 888 039**

(73) Patentinhaber: **Balcke- Dürr AG, Homberger Strasse 2 Postfach 1240, D-4030 Ratingen 1 (DE)**

(72) Erfinder: **Exner, Rodica, Wiener Neustädter Strasse 79, D-4019 Monheim (DE)**
Erfinder: **Krips, Herbert, Grabelohstrasse 176, D-4630 Bochum 7 (DE)**

(74) Vertreter: **Patentanwälte Dipl.- Ing. Alex Stenger Dipl.- Ing. Wolfram Watzke Dipl.- Ing. Heinz J. Ring, Kaiser- Friedrich- Ring 70, D-4000 Düsseldorf 11 (DE)**

EP 0 142 762 B1

## Beschreibung

Die Erfindung betrifft einen zylindrischen Mantel aus Metall als Rohrleitungs- oder Behälterteil mit einer auf seiner Innenseite angeordneten Isolierung aus Isolationsformkörpern, vorzugsweise aus keramischem Material, die in axialer Richtung des Mantels in vorgegebenen Abständen an diesem durch metallische Profilringe gehalten sind, die jeweils einen radial in Richtung auf den Mantel verlaufenden Schenkel als Auflage für die Isolationsformkörper in axialer Richtung und an dessen radial innenliegenden Ende mindestens einen im wesentlichen axial verlaufenden Schenkel aufweisen, der in eine seinem Querschnitt entsprechende Öffnung der Isolationsformkörper eingreift.

Bei einer Isolierung zylindrischer Mäntel wird an diese Isolierung die Aufgabe gestellt, die Wärme von der Wand des zu schützenden Mantels abzuhalten. Während das Isoliermaterial grundsätzlich in der Lage ist, diese Wärmedämmung zu bewirken, treten konstruktive Probleme auf, die bisher nicht zufriedenstellend gelöst werden konnten.

Die auf der Innenseite des zylindrischen Mantels angeordnete Isolierung muß so gestaltet und montiert sein, daß Wärmebrücken, die sich aus der Befestigung der Isolierung und aus Spalten in der Isolierung ergeben, weitestgehend ausgeschlossen werden. Weiterhin muß die Isolierung so konzipiert sein, daß die zu schützende Wand nicht dadurch gefährdet wird, daß eine in einem Spalt zwischen wand und Isolierung entstehende freie Konvektion den Isoliereffekt aufhebt. Schließlich muß dafür gesorgt werden, daß nicht nur eine Gefährdung des Mantels durch unzulässige Überhitzung von Wandungsteilen verhindert wird, sondern Wärmeverluste durch unzulässige Isolirungsanordnungen vermieden werden, da mit jedem Wärmeverlust auch ein Wirkungsgradverlust verbunden ist.

Um die voranstehenden Nachteile zu vermeiden, wird bei den bekannten Konstruktionen das Isoliermaterial über Bolzen mit der zu schützenden Wand in Kontakt gehalten, um die Größe der Wärmebrücken zu reduzieren. Damit Konvektionsströme vermieden werden, sind V-förmige Bleche angeordnet, die den Isolierraum in axialer Richtung unterteilen. Durch eine spezielle Gestaltung der Isolationsformkörper und deren Verbindung durch Zwischenglieder wird versucht, den Formkörpern nicht nur den erforderlichen Halt zu geben, sondern auch radiale Durchtritte in Form von Spalten zu versperren.

Auch diesen bekannten Maßnahmen haftet eine Reihe von Nachteilen an. Die Verwendung von Bolzen zur Halterung der Isolation an der zu schützenden Wand ergibt eine Vielzahl von Wärmebrücken und schließt in den meisten Fällen den Einsatz von Isolationsformkörpern aus. Die Konvektionssperren in Form von V-förmigen Blechen müssen an die zu schützende Wand angeschweißt werden. Hierdurch stellen sie, da sie sich über die gesamte Isolierstrecke erstrecken, ebenso wie die Bolzen Wärmebrücken dar. Da die Spitzen der V-förmigen Bleche nur sehr schwer mit Isolationsmaterial aufzufüllen und der Istzustand nur sehr schwer zu kontrollieren ist, wird der Isolierwert herabgesetzt und es werden Zwischenkonvektionsströme erzeugt. Die Schweißverbindung der Konvektionsringe mit tragenden Strukturen ist darüber hinaus nur schwer als prüfbare Verbindung herzustellen, so daß sie insbesondere den Ansprüchen nicht gerecht wird, die bei ihrer Verwendung an Nuklearkomponenten gestellt werden. Ein ganz entscheidender Nachteil der bekannten Isolierungen unter Verwendung von Isolationsformkörper ist schließlich darin zu sehen, daß diese Isolationsformkörper nicht in der Lage sind, den Wärmeausdehnungen der zu schützenden Wand des zylindrischen Mantels zu folgen, so daß der hohe Isolierwert der Isolationsformkörper durch die zwangsläufig auftretende Klaffung zwischen Wand und Isolierung zunichte gemacht wird.

Aus der US-A-1 888 039 ist ein zylindrischer Mantel als Behälterteil mit einer auf seiner Innenseite angeordneten Isolierung aus Isolationsformkörper bekannt, wobei die Isolationsformkörper in axialer Richtung des Mantels in vorgegebenen Abständen an diesem durch metallische Profilringe gehalten sind. Die Profilringe sind mit in radialer Richtung auf den Mantel zulaufenden Schenkel am Mantel festgeschweißt und weisen an ihren radial innenliegenden Enden im wesentlichen axial verlaufende Schenkel auf, die in ihrem Querschnitt entsprechende Öffnungen der Isolationsformkörper eingreifen.

Von Nachteil ist bei diesem bekannten zylindrischen Mantel insbesondere das Verschweißen der Profilringe am Mantel. Denn zum einen müssen die Schweißarbeiten beim Einbringen der Isolationsformkörper durchgeführt werden, weil es erforderlich ist, zuerst eine einen Teil des Umfangs des Mantels abdeckende Reihe von Isolationsformkörpern einzulegen, bevor der nächste, darüberliegende Profilring angebracht werden kann. Das Anschweißen dieses Profilringes an der Behälterwand erfolgt somit in Anwesenheit der Isolationsformkörper, die hierbei beschädigt werden können. Weiterhin können die Schweißarbeiten das Gefüge des zylindrischen Mantels nachteilig beeinflussen, zumal dann, wenn es sich um einen Mantel aus sehr hochwertigem Material handelt. Schließlich wird der gesamte Montagevorgang der Isolierung erschwert, weil abwechselnd Isolationsformkörper eingebracht und Profilringe angeschweißt werden müssen.

Ein weiterer entscheidender Nachteil ist darin zu sehen, daß die Profilringe eine Wärmebrücke bilden, da sie mit dem Mantel verschweißt sind.

Die Isolierwirkung der Isolationsformkörper wird somit zumindest im Bereich der Profilringe nahezu aufgehoben, wodurch sich zusätzlich der Nachteil ergibt, daß der Mantel unterschiedlich stark aufgeheizt wird, weil die Aufheizung im Bereich der mit ihm verschweißten Profilringe erheblich höher sein wird als in demjenigen Bereich, in dem die Isolationsformkörper wirken, d.h. zwischen den benachbarten Profilringen.

Der Erfindung liegt daher die Aufgabe zugrunde, eine aus Isolationsformkörpern bestehende Isolierung zu schaffen, die auf der Innenseite eines zylindrischen Mantels aus Metall angeordnet und in axialer Richtung des Mantels in vorgegebenen Abständen an diesem gehalten werden kann, ohne daß die voranstehend geschilderten Nachteile auftreten, so daß eine Isolierung geschaffen wird, die mit einfachen technischen Mitteln auch beim Auftreten von Wärmedehnungen das Entstehen von Wärmebrücken sowie von Konvektionen zwischen Wand und Isolierung vermeidet.

Die Lösung dieser Aufgabenstellung durch die Erfindung ist dadurch gekennzeichnet, daß die mit dem Mantel unverschweißten Profilringe ausschließlich durch an der Innenfläche des Mantels angeordnete einzelne Halterungselemente in axialer Richtung festgelegt sind, ohne die radiale Beweglichkeit der Profilringe infolge Wärmeausdehnung zu behindern.

Ein in dieser Weise ausgeführter zylindrischer Mantel bietet den Vorteil einer zuverlässigen Festlegung der Isolierung an der Innenseite des metallischen Mantels selbst bei unterschiedlichen Wärmeausdehnung des Mantels und der Profilringe. Auf diese Weise wird das Entstehen von Konvektionsspalten zwischen zu isolierender Wand und Isolierung vermieden. Da die Profilringe im Inneren der einzelnen Isolationsformkörper angeordnet sind und die Profilringe somit die Isolierung in Richtung auf die heiße Seite nicht durchstoßen, wird ihre Wirkung als Wärmebrücke auf ein Minimum reduziert und vernachlässigbar klein. Hinzu kommt, daß die Profilringe nicht am Mantel verschweißt sind, so daß auch auf diese Weise Wärmebrücken vermieden werden.

Weil die in die Isolierung eingebetteten Profilringe weniger stark gegen Aufwärmung geschützt werden als der zylindrische Mantel, unterliegen sie bei einer Aufheizung aufgrund ihrer höheren Temperatur einer größeren Wärmedehnung als der Mantel. Bei einer Aufheizung folgen die Profilringe somit nicht nur den sich ausdehnenden Mantel, sondern eilen dessen Wärmedehnung vor. Da die Profilringe mit ihrem axialen Schenkel in die Isolationsformkörper eingreifen, werden diese Isolationsformkörper bei einer radialen Ausdehnung der Profilringe von diesen mitgenommen und hierdurch stärker als im kalten Einbauzustand an die Innenfläche des zu isolierenden Mantels gepreßt. Dies verhindert das Entstehen eines Konvektionsspaltes zwischen Mantel und Isolierung.

Bei einer Weiterbildung der Erfindung bestehen die Halterungselemente aus Paaren von Halterungsknaggen, die jeweils an einer der sich gegenüberliegenden Flächen des radialen Schenkels des Profilringes anliegen und zwischen die die einzelnen Profilringe mittels den Querschnittabmessungen der Halterungsknaggen entsprechender Aussparungen in den Profilringen einführbar sind. Dieser Vorschlag ergibt eine besonders einfache Montage der Profilringe innerhalb des zylindrischen Mantels.

Gemäß einen weiteren Merkmal der Erfindung können die radialen Schenkel jedes Profilringes bis an die Innenfläche des Mantels heranreichen, um das Entstehen einer Konvektionsströmung zwischen dem Mantel und der aus den Isolationsformkörpern bestehenden Isolierung zu verhindern.

Auf der Zeichnung sind verschiedene Ausführungsbeispiele der Erfindung dargestellt, und zwar zeigen:

Fig. 1   einen Längsschnitt durch ein Anwendungsbeispiel eines zylindrischen Mantels mit der erfindungsgemäß angebrachten Isolierung,

Fig. 2   einen perspektivisch gezeichneten Ausschnitt in Form eines Teilschnittes des mit einer Isolierung aus Isolationsformkörpern versehenen Mantels,

Fig. 3   eine der Fig. 2 entsprechende Darstellung, die in der oberen Hälfte den Einbauzustand vor der Erwärmung und in der unteren Hälfte den Zustand nach der Erwärmung zeigt,

Fig. 4   einen Axialschnitt durch aneinanderstoßende Teile benachbarter Isolationsformkörper bei Verwendung eines Zwischengliedes,

Fig. 5   eine der Fig. 4 entsprechende Darstellung, bei welcher benachbarte Isolationsformkörper einander stufenförmig überlappen,

Fig. 6   einen in vergrößerter Darstellung gezeichneten Axialschnitt entsprechend der Schnittlinie VI-VI in Fig. 1 und

Fig. 7   einen Teilschnitt gemäß der Schnittlinie VII-VII in Fig.6.

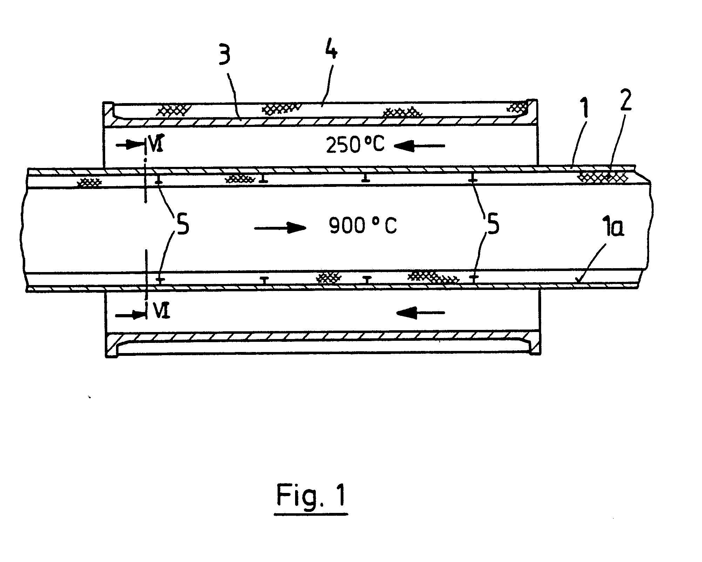

Bei dem in Fig. 1 dargestellten Ausführungsbeispiel ist ein zylindrischer Mantel 1 aus Metall zu erkennen, der auf seiner Innenfläche 1a mit einer Isolierung 2 versehen ist. Im Inneren dieses Mantels 1 strömt beispielsweise ein gasförmiges Medium mit einer Temperatur von 900° Celsius, während auf der Außenseite des Mantels 1 in einem durch ein Außengehäuse 3 gebildeten Ringraum ein Radium mit einer Temperatur von 250° Celsius strömt. Dieses Außengehäuse 3 ist auf seiner Außenseite mit einer Isolierung 4 versehen. Der Mantel 1 ist somit Teil einer Rohrleitung oder eines Behälters.

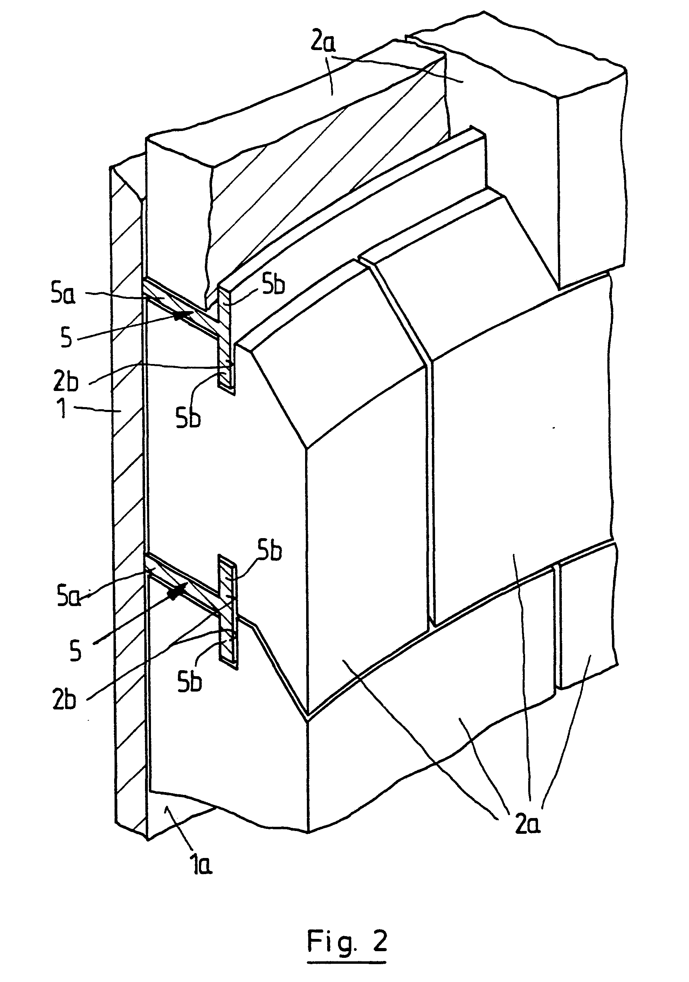

Wie die Fig. 2 erkennen läßt, besteht die Isolierung 2 des Mantels 1 aus einzelnen Isolationsformkörpern 2a, die mittels Profilringen 5 am Mantel 1 gehalten werden. Diese Profilringe 5 sind in vorgegebenen Abständen angeordnet, wie Fig. 1 erkennen läßt. Eine konkrete Ausführungsform der Profilringe 5 zeigt Fig. 2.

Gemäß dieser Darstellung in Fig. 2 weist jeder metallische Profilring 5 einen radial in Richtung auf den Mantel 1 verlaufenden Schenkel 5a auf, dessen radial außenliegendes Ende beim Ausführungsbeispiel nach Fig. 2 bis an die Innenfläche 1a des Mantels 1 heranreicht. Am radial innenliegenden Ende dieses Schenkels 5a sind beim Ausführungsbeispiel nach Fig. 2 zwei im wesentlichen axial verlaufende Schenkel 5b ausgebildet. Jeder dieser axialen Schenkel 5b ragt in eine seinem Querschnitt entsprechende Öffnung 2b der Isolationsformkörper 2a hinein, die sich im übrigen in axialer Richtung des Mantels 1 auf dem radialen Schenkel 5a des Profilringes 5 abstützen.

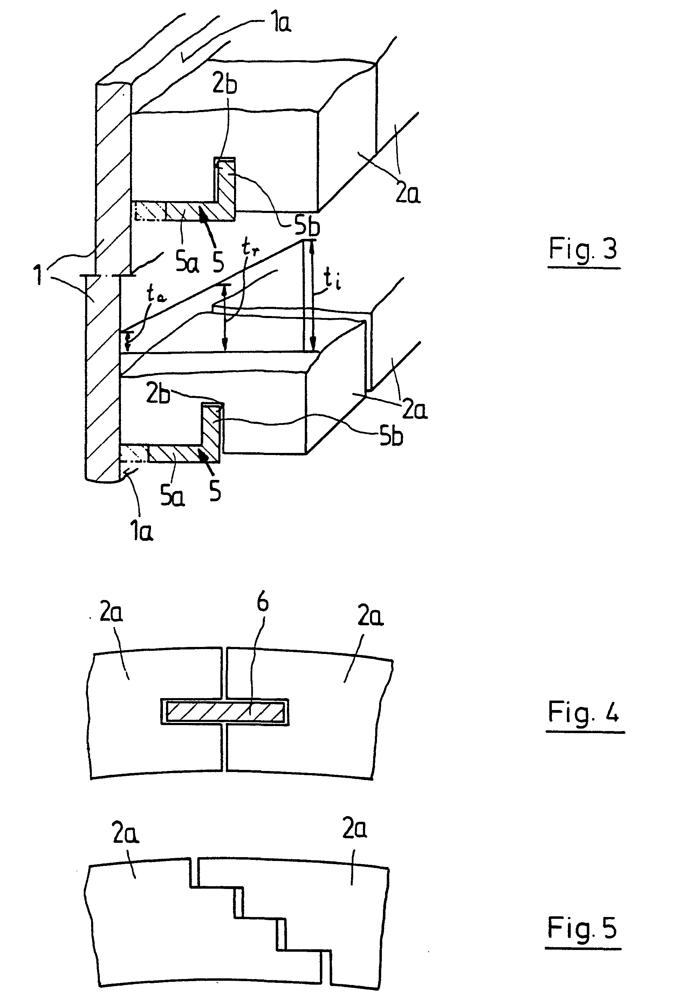

Bei einer zweiten Ausführungsform der Profilringe 5, die in Fig. 3 dargestellt ist, besitzt jeder Profilring 5 am radial innenliegenden Ende seines radialen Schenkels 5a lediglich einen axialen Schenkel 5b. Außerdem endet der radiale Schenkel 5a im Abstand von der Innenfläche 1a des Mantels 1. Mit strichpunktierten Linien ist allerdings dargestellt, daß der radiale Schenkel 5a auch bis an die Innenfläche 1a des Mantels 1 heranreichen kann.

Anhand des Ausführungsbeispiels nach Fig. 3 soll die Wirkung der Profilringe 5 zwecks zuverlässiger Halterung der Isolationsformkörper 2a erläutert werden. Zu diesem Zweck ist in der oberen Hälfte der Fig. 3 ein Einbauzustand gezeichnet, wie er sich ergibt, wenn sämtliche Teile Raumtemperatur besitzen. Es ist zu erkennen, daß die Isolationsformkörper 2a auf der Oberseite des radialen Schenkels 5a des Profilringes 5 aufliegen, der mit seinem axialen Schenkel 5b in die Öffnung 2b der Isolationsformkörper 2a eingreift. In diesem Zustand kann sich ein Spalt zwischen dem axialen Schenkel 5b des Profilringes 5 und den Isolationsformkörpern 2a im Bereich deren Öffnung 2b auf der radial außen liegenden Seite des axialen Schenkels 5b ausbilden. Außerdem ist es nicht erforderlich, daß selbst bei verlängertem radialen Schenkel 5a die radial außen liegenden Stirnfläche dieses Schenkels 5a an der Innenfläche 1a des Mantels 1 anliegt.

Wird der Mantel 1 nunmehr aus deisem kalten Zustand heraus aufgeheizt, ergibt sich das in der unteren Hälfte in Fig. 3 eingezeichnete Temperaturprofil. Dieses Temperaturprofil zeigt, daß an der dem heißen Medium zugewandten Innenfläche der Isolationsformkörper 2a die Temperatur $t_i$ herrscht. Infolge der Isolierwirkung der Isolationsformkörper 2a wird der Mantel 1 lediglich auf die Temperatur $t_a$ erwärmt.

Trotz dieser erheblich geringeren Temperatur $t_a$ dehnt sich der Mantel 1 aufgrund seines Temperaturanstiegs gegenüber dem kalten Zustand aus, wie aus einem Vergleich seiner Lage in der oberen und unteren Hälfte der Fig. 3 zu erkennen ist. Diese Ausdehnung des Mantels 1 wird noch vergrößert, wenn der Mantel 1 nicht nur einer höheren Temperatur, sondern auch einem höheren Druck ausgesetzt wird.

Obwohl der Profilring 5 in die Isolationsformkörper 2a eingebettet ist, erreicht er - wie das Temperaturprofil erkennen läßt - eine über der Temperatur $t_a$ liegende Temperatur $t_r$, weil für ihn nur ein Teil der Isolierwirkung der Isolationsformkörper 2a wirksam wird. Im aufgewärmten Zustand besitzt somit der Profilring 5 dehnt sich demzufolge aufgrund der Temperatureinwirkung stärker aus als der Mantel 1. Dies hat zur Folge, daß sich der radiale Abstand zwischen der Innenfläche 1a des Mantels 1 und der radial außen liegenden Fläche des axialen Schenkels 5b des Profilringes 5 bei der Aufheizung verringert. Da der axiale Schenkel 5b des Profilringes 5 in die Öffnung 2b der Isolationsformkörper 2a eingreift, nimmt er diese Isolationsformkörper 2a bei seiner Durchmesservergrößerung infolge Wärmedehnung mit. Selbst wenn im kalten Zustand ein geringfügiger Spalt zwischen axialem Schenkel 5b und Isolationsformkörpern 2a vorhanden war, werden die Isolationsformkörper 2a demgemäß im warmen Zustand gegen die Innenfläche 1a des Mantels 1 gedrückt, und zwar unabhängig davon, ob der radiale Schenkel 5a des Profilringes 5 bis an die Innenfläche 1a des Mantels 1 heranreicht oder nicht.

Durch diese Mitnahme der Isolationsformkörper 2a bei einer Wärmedehnung des Profilringes 5 wird sichergestellt, daß zwischen der Innenfläche 1a des Mantels 1 und der benachbarten Fläche der Isolationsformkörper 2a kein Spalt entsteht, der eine Konvektion und damit unzulässige Aufheizung des Mantels 1 zulassen würde. Für den Fall, daß der radiale Schenkel 5a des Profilringes 5 (wie mit strichpunktierten Linien in Fig. 3 dargestellt) bis an die Innenfläche 1a des Mantels 1 heranreicht, ergibt dieser radiale Schenkel 5a des Profilringes 5 eine zusätzliche Abdichtwirkung.

Die Fig. 3 zeigt auch, daß bei der voranstehend geschilderten Mitnahme der Isolationsformkörper 2a bei einer Wärmedehnung des Profilringes 5 zwischen den Isolationsformkörpern 2a in Umfangsrichtung Spalten entstehen können, die einen Zutritt des heißen Gases zum Mantel 1 bewirken könnten. Um diesen Zutritt zu verhindern, können benachbarte Isolationsformkörper 2a gemäß dem Ausführungsbeispiel in Fig. 4 durch ein Zwischenglied 6 miteinander verbunden sein. Diese über die gesamte axiale Erstreckung der Isolationsformkörper 2a verlaufenden Zwischenglieder 6 bilden einen ausreichenden Verschluß der zwangsläufig in Umfangsrichtung entstehenden Spalten, wobei zusätzlich die Möglichkeit besteht, die entsprechenden Räume bei der Montage der Isolationsformkörper 2a mit Fasermatten auszufüllen.

Die in Fig. 5 zeigt eine weitere Ausführungsmöglichkeit für die Verhinderung von Spalten in Umfangsrichtung. Bei dieser Ausführungsform überlappen sich benachbarte Isolationsformkörper 2a durch eine treppenartige Ausbildung, die zwar in Umfangsrichtung verlaufende Spalten entstehen läßt, die einzelne Spalte jedoch durch Anliegen der Isolationsformkörper 2a in radialer Richtung voneinander trennt, so daß kein durchgehender Spalt entsteht. Die hierdurch hervorgerufene Labyrintwirkung reicht aus, den Mantel 1 zuverlässig vor einer Aufwärmung zu schützen.

Bei größeren Längen des mit der voranstehend beschriebenen Isolierung 2 zu versehenden Mantels 1 kann es erforderlich werden, mindestens einen Teil der Profilringe 5 in axialer Richtung am Mantel 1 festzulegen. Da die Profilringe 5 nicht mit dem Mantel 1 verbunden und insbesondere nicht mit diesem verschweißt sind, sind sie gemeinsam mit den Isolationsformkörpern 2a einfach zu montieren. Bei den voranstehend geschilderten Ausführungsbeispielen ergeben sie jedoch keine formschlüssige Festlegung der Isolationformkörper 2a am Mantel 1.

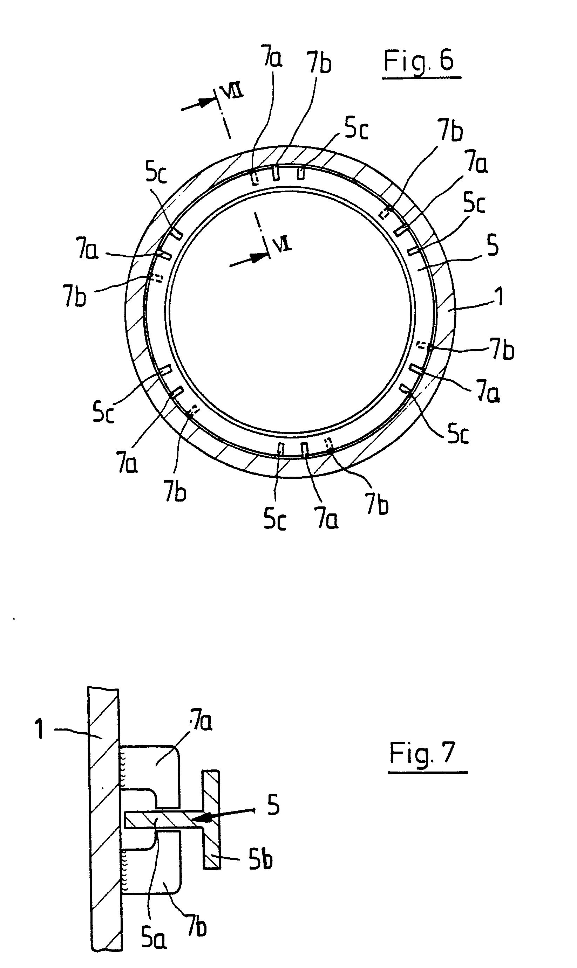

In den Figuren 6 und 7 ist nunmehr eine Ausführungsform dargestellt, bei der die Profilringe 5 an der Innenfläche 1a des Mantels 1 festgelegt sind. Zu diesem Zweck sind Paare von Halterungsknaggen 7a, 7b vorgesehen. Diese Halterungsknaggen 7a, 7b besitzen die Form eines Winkels und sind jeweils an einem Schenkel an der Innenfläche 1a des Mantels 1 angeschweißt. Mit ihrem anderen Schenkel liegen sie jeweils an einer der sich gegenüberliegenden Flächen des radialen Schenkels 5a des Profilringes 5 an, so daß diese Profilring 5 in axialer Richtung am Mantel 1 festgelegt wird, ohne seinerseits mit dem Mantel 1 veschweißt zu sein. Die Halterungsknaggen 7a lassen sich als Einzelteile ohne Schwierigkeiten überprüfbar an der Innenfläche 1a des Mantels 1 anschweißen. Sie sind beim Ausführungsbeispiel gemäß Fig. 6 paarweise angeordnet, jedoch geringfügig in Umfangsrichtung zueinander versetzt, so daß der mit entsprechenden Aussparungen 5c versehene Profilring 5 in axialer Richtung über die obere Halterungsknagge 7a auf die untere Halterungsknagge 7b aufgelegt und durch Verdrehen in Umfangsrichtung in beiden Richtungen festgelegt werden kann. Trotz dieser Festlegung in axialer Richtung behindern die Halterungsknaggen 7a und 7b die radiale Beweglichkeit der Profilringe 5 nicht, so daß diese den voranstehend geschilderten Wärmedehnungen unter Mitnahme der Isolationsformkörper 2a können.

## Patentansprüche

1. Zylindrischer Mantel (1) aus Metall als Rohrleitungs- oder Behälterteil mit einer auf seiner Innenseite angeordneten Isolierung (2) aus Isolationsformkörpern (2a), vorzugsweise aus keramischem Material, die in axialer Richtung des Mantels (1) in vorgegebenen Abständen an diesem durch metallische Profilringe (5) gehalten sind, die jeweils einen radial in Richtung auf den Mantel (1) verlaufenden Schenkel (5a) als Auflage für die Isolationsformkörper (2a) in axialer Richtung und an dessen radial innenliegenden Ende mindestens einen im wesentlichen axial verlaufenden Schenkel (5b) aufweisen, der in eine seinem Querschnitt entsprechende Öffnung (2b) der Isolationsformkörper (2a) eingreift, dadurch gekennzeichnet, daß die mit dem Mantel (1) unverschweißten Profilringe (5) ausschließlich durch an der Innenfläche (1a) des Mantels (1) angeordnete einzelne Halterungselemente (7a, 7b) in axialer Richtung festgelegt sind, ohne die radiale Beweglichkeit der Profilringe (5) infolge Wärmeausdehnung zu behindern.

2. Zylindrischer Mantel nach Anspruch 1, dadurch gekennzeichnete, daß die Halterungselemente aus Paaren von Halterungsknaggen (7a, 7b) bestehen, die jeweils an einer der sich gegenüberliegenden Flächen des radialen Schenkels (5a) des Profilringes (5) anliegen und zwischen die die einzelnen Profilringe (5) mittels den Querschnittsabmessungen der Halterungsknaggen (7a, 7b) entsprechender Aussparungen (5c) in den Profilringen (5) einführbar sind.

3. Zylindrischer Mantel nach Anspruch 1 oder 2, dadurch gekennzeichnet, daß der radiale Schenkel (5a) jedes Profilringes (5) bis an die Innenfläche (1a) des Mantels (1) heranreicht.

## Claims

1. A cylindrical metal jacket (1) as part of piping or of a receptacle and having on its inside insulation (2) in the form of mouldings (2a), preferably of ceramic, which are retained by metallic section rings (5) at predetermined distances from the jacket (1) axially thereof and which each have: an arm (5a) extending radially towards the jacket (1) and operative axially as support for the mouldings (2a); and on the radially inwards end of the arm at least one arm (5b) which extends substantially axially and which engages in an aperture (2b) of corresponding cross-section in the mouldings (2a), characterised in that the section rings (5), which are not welded to the jacket (1), are secured axially solely by discrete retaining elements (7a, 7b) disposed on the inside surface (1a) of the jacket (1) without impairment of heat- expansion-induced radial mobility of the section rings (5).

2. A jacket according to claim 1, characterised in that the retaining elements are in the form of pairs of retaining brackets or the like (7a, 7b) which each engage one of the opposite surfaces of the radial arm (5a) of the section ring (5) and which are introducible between the discrete rings (5) by means of recesses (5c) therein which correspond to the cross-sectional dimensions of the brackets (7a, 7b).

3. A jacket according to claim 1 or 2, characterised in that the radial arm (5a) of each ring (5) extends as far as the inside surface (1a) of the jacket (1).

## Revendications

1. Enveloppe (1) cylindrique en métal constituant une partie de canalisation ou de réservoir avec un isolement (2) disposé sur sa face intérieure, lui-même constitué par des corps galbés isolants (2a), de préférence en matière céramique, qui sont maintenus en direction axiale de l'enveloppe (1) à intervalles déterminés contre celle-ci par des anneaux profilés métalliques (5), lesquels présentent respectivement une branche (5a) s'étendant radialement en direction de l'enveloppe comme appui des corps galbés isolants (2a) en direction axiale et à leur extrémité située à l'intérieur en direction radiale au moins une branche (5b) s'étendant sensiblement en direction axiale, qui est engagée dans une ouverture (2b) correspondant à sa section des corps galbés isolants (2a) caractérisée en ce que les anneaux profilés (5) non soudés sur l'enveloppe (1) sont uniquement fixés en direction axiale par divers éléments de fixation (7a, 7b) disposés sur la face intérieure (1a) de l'enveloppe (1), sans contrarier la mobilité radiale des anneaux profilés (5) par suite de la dilatation thermique.

2. Enveloppe cylindrique selon la revendication 1, caractérisée en ce que les éléménts de fixation sont constitués par des paires de goussets de fixation (7a, 7b) qui s'appuient respectivement sur une des surfaces en regard de la branche radiale (5a) de l'anneau profilé (5) et entre lesquels les anneaux profilés (5) peuvent être introduits au moyen d'évidements (5c) dans les anneaux profilés (5) correspondant aux dimensions de la section des goussets de fixation (7a, 7b).

3. Enveloppe cylindrique selon la revendication 1 ou 2, caractérisée en ce que la branche radiale (5a) de chaque anneau profilé (5) s'avance jusqu'à la paroi intérieure (1a) de l'enveloppe (1).

Fig. 1

Fig. 2

Fig. 3

Fig. 4

Fig. 5

Fig. 6

Fig. 7